# EUROPÄISCHE PATENTANMELDUNG

(11) **EP 2 522 924 A2**
(43) Veröffentlichungstag der Anmeldung: **14.11.2012**
(21) Anmeldenummer: 12166756.2
(22) Anmeldetag: 04.05.2012
(51) Int. Cl.: F24F 13/06

(54) **Zuluftdecke**

(30) Priorität: 11.05.2011 DE 102011050273
(71) Anmelder: YIT Germany GmbH, 80992 München (DE)
(72) Erfinder: Makulla, Detlef, Dipl.-Ing., 52134 Herzogenrath (DE)
(74) Vertreter: Bauer, Dirk

(57) **Zusammenfassung**

Zuluftdecke (1), insbesondere für Operationssäle, aufweisend mindestens einen Lufteintrittsraum, mindestens eine Filtereinheit (8) und einen Luftaustrittsraum (7) mit einer durch mindestens einen Laminarisator (10) gebildeten Luftaustrittsfläche (9), wobei ein Zuluftstrom mittels mindestens eines Anschlussstutzens (3) in den mindestens einen Lufteintrittsraum leitbar und von dort ausgehend dem Luftaustrittsraum (7) ausschließlich mittels eines Durchströmens der mindestens einen Filtereinheit (8) zuführbar ist, wobei der mindestens eine Lufteintrittsraum (7) aus einer Mehrzahl einzelner, in einer zu der Luftaustrittsfläche (9) parallelen Ebene angeordneter Anschlussmodule (2, 2', 2", 2"') zusammengesetzt ist.

Um eine solche modular aufgebaute Zuluftdecke (1) hervorzubringen, die geeignet ist, eine homogene Zuluftströmung in den jeweils zu belüftenden Raum abzugeben, wird erfindungsgemäß vorgeschlagen, dass der zwischen der mindestens einen Filtereinheit (8) und der Luftaustrittsfläche (9) angeordnete Luftaustrittsraum (7) durchgehend ausgeführt ist.

## Beschreibung

### Einleitung

Die Erfindung betrifft eine Zuluftdecke, insbesondere für Operationssäle, aufweisend mindestens einen Lufteintrittsraum, mindestens eine Filtereinheit und einen Luftaustrittsraum mit einer durch mindestens einen Laminarisator gebildeten Luftaustrittsfläche, wobei ein Zuluftstrom mittels mindestens eines Anschlussstutzens in den mindestens einen Lufteintrittsraum leitbar und von dort ausgehend dem Luftaustrittsraum ausschließlich mittels eines Durchströmens der mindestens einen Filtereinheit zuführbar ist, wobei der mindestens eine Lufteintrittsraum aus einer Mehrzahl einzelner, in einer zu der Luftaustrittsfläche parallelen Ebene angeordneter Anschlussmodule zusammengesetzt ist.

### Stand der Technik

Zuluftdecken der eingangs beschriebenen Art sind allgemein bekannt. Besonders während Operationen ist ein stark erhöhtes Risiko gegeben, dass der jeweilige Patient mit schädlichen Erregern infiziert wird. Es ist daher besonders darauf zu achten, dass sowohl sämtliche Armaturen und Werkzeuge als auch behandelnde Personen und sonstiges anwesendes Personal keimfrei sind, um das Infektionsrisiko zu minimieren. Entsprechend ist es ferner von besonderer Wichtigkeit, dass in den jeweiligen Operationssaal gelangende Zuluft rein ist. Ein derartiger Zuluftstrom wird in diesem Zusammenhang darüber hinaus dazu genutzt, gegebenenfalls in dem Operationssaal befindliche schädliche Stoffe aus der unmittelbaren Umgebung des zu behandelnden Patienten zu verdrängen.

Letzteres erfolgt üblicherweise über einteilige, nicht modular aufgebaute Zuluftdecken, die direkt über dem Operationstisch angeordnet werden und eine homogene, laminare, vertikal ausgerichtete Strömung abgeben, die von der Decke des Operationssaals ausgehend abströmt und beispielsweise an Absaugöffnungen in bodennah angeordneten Schlitzen wieder abgesaugt wird. Mittels einer derartigen laminaren Strömung ist es möglich, unerwünschte, in der Luft des Operationssaals befindliche Partikel zu verdrängen und eine Reinheit der Luft zu verbessern.

Bei den in Operationssälen eingesetzten einteiligen Zuluftdecken handelt es sich üblicherweise um 3,20 m x 3,20 m große Einheiten, die unterhalb der Rohbaudecke des Operationssaales angeordnet werden. Bei diesen bekannten Zuluftdecken ergibt sich dabei hinsichtlich der Handhabung der Nachteil, dass selbige aufgrund ihrer Abmessungen besonders unhandlich sind und sich nur unter großem Aufwand montieren lassen. Entsprechend aufwendig gestalten sich Reparaturen im Falle eines Ausfalls einer solchen Zuluftdecke. Neben den Abmessungen schlägt sich ferner das beträchtliche Gewicht der gesamten Zuluftdecke für die Montage hinderlich nieder.

Allerdings zeigt beispielsweise die DE 27 17 613 A1 eine Vorrichtung zur Rezirkulation der Raumluft eines Raums, die aus einzelnen Modulen gebildet ist. Durch die Aufteilung der Vorrichtung in einzelnen Module kann der Nachteil der Handhabbarkeit weitestgehend behoben werden, da jedes Modul separat montiert und angeschlossen beziehungsweise ausgetauscht werden kann. Allerdings wirken die einzelnen Module gemäß dem genannten Dokument jeweils für sich allein und sind dabei lediglich nebeneinander angeordnet. Somit weist jedes Modul einen separaten Ventilator auf, der die im Raum befindliche Luft ansaugt und durch ein separates Filterelement in einen separaten Luftaustrittsraum befördert, von dem aus die Luft schließlich wieder in den Raum gelangt.

Eine gleichartige beziehungsweise einheitliche Luftströmung im Sinne eines homogenen Zuluftstroms ist mittels der Vorrichtung gemäß der DE 27 17 613 A1 nicht erzeugbar, da sowohl die jeweiligen Luftzutritte als auch die Luftaustritte für jedes separate Modul einzeln vorliegen. Somit könnten sich beispielsweise in den individuellen, in den zu belüftenden Raum abgegebenen Luftströmungen insbesondere Unterschiede in den Strömungsgeschwindigkeiten sowie Temperaturunterschiede ausbilden, die die Entstehung einer homogenen laminaren Strömung stören könnten. Insbesondere die gezeigte Umluftzirkulation ist dabei insofern anfällig, als dass die Luft an unterschiedlichen Stellen im Raum unterschiedliche Temperaturen aufweist. Somit ist bereits die dem Filterelement beziehungsweise dem Luftaustrittsraum zugeführte Luft in ihrer Beschaffenheit jeweils unterschiedlich.

### Aufgabe

Die Aufgabe der vorliegenden Erfindung besteht darin, eine solche modular aufgebaute Zuluftdecke hervorzubringen, die geeignet ist, eine homogene Zuluftströmung in den jeweils zu belüftenden Raum abzugeben.

### Lösung

Die Aufgabe wird erfindungsgemäß dadurch gelöst, dass der zwischen der mindestens einen Filtereinheit und der Luftaustrittsfläche angeordnete Luftaustrittsraum durchgehend ausgeführt ist.

Unter durchgehend ist in diesem Zusammenhang zu verstehen, dass der Luftaustrittsraum zwar über Einbauten und Hindernisse verfügen kann, es jedoch keine Stelle in dem Luftaustrittsraum gibt, die vollständig von einer beliebigen anderen Stelle des Luftaustrittsraums derart abgeschirmt ist, dass keine Luft zwischen diesen beiden Stellen ausgetauscht werden kann. Optimalerweise ist der Luftaustrittsraum überdies hindernisfrei beziehungsweise frei von Einbauten und dergleichen.

Eine vertikale Unterteilung des Luftaustrittsraums ist dabei nicht ausgeschlossen. Somit könnte der Bereich zwischen der mindestens einen Filtereinheit und der Luftaustrittsfläche mittels einer horizontal orientierten Unterteilung in zwei separate Zonen unterteilt sein. Die jeweilige der Luftsaustrittsfläche zugewandte Zone, von der ausgehend die Zuluft tatsächlich in den Raum überströmt, bildet in diesem Fall den Luftaustrittsraum, wobei dieser Luftaustrittsraum gemäß Anspruch 1 in horizontale Richtung durchgehend ausgeführt sein soll. Dies gilt nicht zwangsläufig für die über dem Luftaustrittsraum angeordnete separate Zone, wenngleich eine Unterteilung derselben gleichermaßen im Zweifel eher hinderlich wäre.

Diese Art der Ausführung des Luftaustrittsraums hat den Vorteil, dass der Zuluftstrom optimalerweise nach einem Durchgang durch die mindestens eine Filtereinheit, zumindest jedoch vor dem Austritt aus der Zuluftdecke, durch den mindestens einen Laminarisator insofern homogenisiert wird, als dass sich eine Strömungsgeschwindigkeit und die Temperatur des Zuluftstroms über die gesamte Luftaustrittsfläche angleichen kann, also eine Vermischung der aus den einzelnen Modulen stammenden Zuluft ermöglicht wird. Der Laminarisator übernimmt dabei sowohl eine Drossel- als auch eine Gleichrichtungsfunktion. Aufgrund der Drosselfunktion bildet sich in dem über sämtliche Module einheitlichen Luftaustrittsraum ein homogenes Druckverhältnis und demgemäß eine homogene Abströmgeschwindigkeit des Zuluftstroms aus. Ferner bewirkt der Laminarisator eine laminare Strömungscharakteristik des Zuluftstroms.

Speziell für den Fall, dass einzelne Anschlussmodule mittels separater Filtereinheiten von dem Luftaustrittsraum abgetrennt sind und in einer solchen Konstellation der Luftaustrittsraum in einzelne Segmente unterteilt wäre, könnte es beispielsweise durch unterschiedlich stark mit Partikeln beladene Filtereinheiten zu unterschiedlichen Strömungsgeschwindigkeiten des Zuluftstroms kommen, die sich in der Folge vor dem Austritt aus der Luftaustrittsfläche nicht ausgleichen könnten wodurch die Belüftung des Zielraumes letztlich nicht homogen erfolgen würde. Letzteres ist von Nachteil und soll entsprechend mittels der erfindungsgemä-βen durchgehenden Ausgestaltung des Luftaustrittsraums vermieden werden.

Auf diese Weise bleibt der Vorteil der "einheitlichen Zuluftströmung" einer herkömmlichen einteiligen Zuluftdecke erhalten, wobei die einzelnen Anschlussmodule gegenüber derartigen herkömmlichen Zuluftdecken jeweils erheblich geringere Abmessungen sowie eine deutlich geringere Masse aufweisen. Die einzelnen Anschlussmodule können einzeln montiert werden und nachfolgend zu mindestens einem Lufteintrittsraum (separate Lufteintrittsräume sind für die homogene Abströmung in den Raum unschädlich) zusammengesetzt werden. Aufgrund der notwendigen Einhaltung einer geringen Bauhöhe und einer sinnvollen Verteilung des Zuluftstroms ist dabei lediglich eine Anordnung der einzelnen Anschlussmodule nebeneinander, also in einer zu den Laminarisatoren parallelen Ebene, sinnvoll. Die Anschlussmodule selbst weisen üblicherweise eine kastenartige Form auf, andere Geometrien, wie beispielsweise eines kurzen Zylinders, sind aber ebenso denkbar.

Es ist besonders vorteilhaft, den mindestens einen Lufteintrittsraum aus genau vier Anschlussmodulen zu bilden, wobei diese vier Anschlussmodule vorzugsweise quadratisch angeordnet sein sollten. Angesichts der Abmessungen von 3,20 m x 3,20 m, die die Zuluftdecke unter Verwendung der einzelnen Anschlussmodule letztendlich erreichen soll, ist eine Unterteilung des Lufteintrittsraums in vier Anschlussmodule ausreichend, um eine gute Handhabbarkeit der einzelnen Anschlussmodule zu gewährleisten. Eine weitere Unterteilung des mindestens einen Lufteintrittsraums ist zwar ebenfalls denkbar und würde zu einer weiteren Gewichtsreduktion jedes einzelnen Anschlussmoduls führen, wäre jedoch hinsichtlich des erhöhten, bedingt durch die Vielzahl einzelner Anschlussmodule auftretenden Montageaufwandes gegebenenfalls nachteilig gegenüber der Lösung mit genau vier Anschlussmodulen. Aufgrund der üblicherweise quadratischen Geometrie der gesamten Zuluftdecke, ist eine quadratische Anordnung der einzelnen Anschlussmodule zu bevorzugen.

Hinsichtlich der Versorgung jedes einzelnen Anschlussmoduls mit dem Zuluftstrom sollten die einzelnen Anschlussmodule mittels Verbindungskanälen untereinander verbunden sein. Mittels derartiger Verbindungskanäle erreicht die fertig montierte Zuluftdecke eine maximale Flexibilität, da prinzipiell der Anschluss eines jeden einzelnen Anschlussmoduls an einen Zuluftstrom ausreicht, um letztendlich jedes Anschlussmodul mit dem Zuluftstrom zu versorgen und somit einen zusammenhängenden Lufteintrittsraum zu schaffen. Alternativ ist es denkbar, nur ausgewählte Anschlussmodule miteinander zu verbinden und beispielsweise durch einen separaten Anschluss jeweils zweier miteinander verbundener Anschlussmodule zwei unabhängige Lufteintrittsräume auszubilden.

In diesem Zusammenhang ist es besonders vorteilhaft, wenn jedes Anschlussmodul mit mindestens drei Anschlussstutzen versehen ist. Bei einer Verwendung von vier Anschlussmodulen in einer quadratischen Anordnung ist mittels dreier Anschlussstutzen pro Anschlussmodul eine maximale Flexibilität der Führung des Zuluftstroms sichergestellt. Geht man beispielsweise von rechteckigen Anschlussmodulen aus, so wären bei einer Anordnung mindestens dreier Anschlussstutzen immer mindestens zwei Anschlussstutzen über Eck angeordnet, so dass jeweilig entlang einer Mittelachse der Anschlussstutzen verlaufende Längsachsen senkrecht aufeinander stünden. Geht man ferner von einer quadratischen Anordnung der einzelnen Anschlussmodule aus und betrachtet diese in einer Draufsicht, so kann mittels der über Eck angeordneten Anschlussstutzen stets sowohl ein in eine vertikale Richtung benachbartes Anschlussmodul als auch ein in eine horizontale Richtung benachbartes Anschlussmodul angeschlossen werden. Der dritte Anschlussstutzen stellt indes sicher, dass neben dem Anschluss benachbarter Anschlussmodule ferner ein Zuluftkanal angeschlossen werden kann. Speziell bei einer Anordnung von insgesamt vier Anschlussmodulen für eine Zuluftdecke bietet folglich eine Anordnung von vier Anschlussstutzen pro Anschlussmodul keinen weiteren Vorteil.

Sollten weniger als drei Anschlussstutzen pro Anschlussmodul vorgesehen sein, so sollte jedoch immer mindestens ein Anschlussstutzen vorhanden sein, um das jeweilige Anschlussmodul an einen Zuluftkanal anzuschließen.

Besonders bei beengten Platz- oder sonstigen hinderlichen Verhältnissen, die lediglich den Anschluss eines einzigen Anschlussmoduls an den Zuluftstrom zulassen, ist es besonders vorteilhaft, wenn jedes einzelne Anschlussmodul mit seinen beiden nächstgelegenen Anschlussmodulen verbunden ist. Auf diese Weise ist sichergestellt, dass der Zuluftstrom zum einen alle Anschlussmodule erreicht und zum anderen dabei stets auf dem kürzesten Weg das jeweilig nächste Anschlussmodul erreicht.

Der mindestens eine Laminarisator der Zuluftdecke sollte vorzugsweise so ausgeführt sein, dass er aus mindestens einem mit textilem Gewebe bespannten Rahmenelement gebildet ist. Derartige Rahmenelemente weisen üblicherweise eine Abmessung von 80 cm x 80 cm auf. Auf diese Weise ausgeführte Laminarisatoren lassen sich besonders einfach ein- oder mehrlagig anordnen, wodurch eine Abströmungsgeschwindigkeit des Zuluftstroms in den Zielraum eingestellt werden kann. Die Anzahl der Lagen bezieht sich dabei auf die Anzahl der in Strömungsrichtung betrachtet übereinander angeordneten textilen Gewebe. Umso mehr Lagen übereinander angeordnet werden, desto geringer fällt üblicherweise die Abströmungsgeschwindigkeit aus. Aufgrund der Vorgehensweise der mehrlagigen Anordnung stets gleicher Laminarisatorgewebe, fällt eine Lagerhaltung derselben leichter und es wird außerdem eine Verwechslungsgefahr unterschiedlicher Gewebe ausgeschlossen.

### Ausführungsbeispiele

Die erfindungsgemäße Zuluftdecke wir nachfolgend anhand mehrerer Ausführungsbeispiele, die in den Figuren dargestellt sind, näher erläutert

Es zeigt:
- Fig. 1:: eine Draufsicht einer erfindungsgemäßen Zuluftdecke,
- Fig. 2:: wie Figur 1, jedoch im Schnitt,
- Fig. 3:: wie Figur 2, jedoch mit einer alternativen Anordnung der Laminarisatoren und
- Fig. 4a - 4f:: verschiedene Anschlussmöglichkeiten und Verbindungsmöglichkeiten einzelner Anschlussmodule einer erfindungsgemäßen Zuluftdecke.

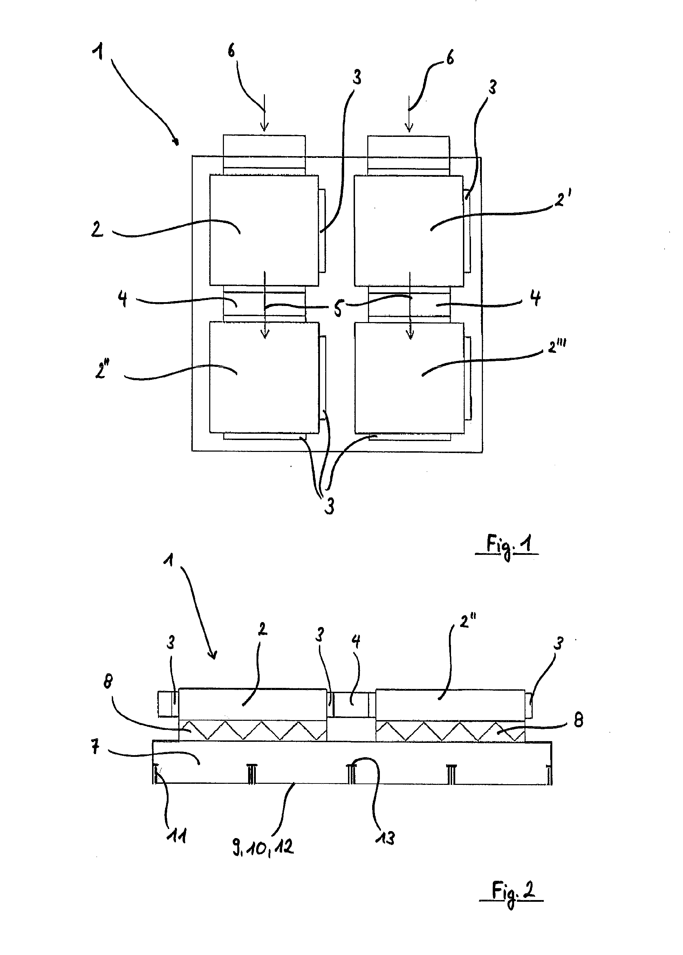

In einem ersten Ausführungsbeispiel, das in Figur 1 dargestellt ist, weist eine Zuluftdecke 1 vier Anschlussmodule 2, 2', 2", 2'" auf, die jeweils über drei Anschlussstutzen 3 verfügen. Im gezeigten Beispiel sind die Anschlussmodule 2, 2" und 2', 2'" jeweils mittels Verbindungskanälen 4 miteinander verbunden, so dass ein jeweiliger Zuluftstrom zwischen den verbundenen Anschlussmodulen 2, 2" beziehungsweise 2', 2'" fließen kann. Dies ist in Figur 1 mittels vertikal ausgerichteter Pfeile 5 verdeutlicht. Die Anschlussmodule 2, 2' sind ferner an einen nicht dargestellten Zuluftkanal angeschlossen und werden durch diesen mit einem Zuluftstrom versorgt, der durch Pfeile 6 angedeutet ist. Jedes der Anschlussmodule 2, 2', 2", 2'" weist geringere Abmessungen auf, als ein Viertel der Zuluftdecke 1.

Die in Figur 1 in einer Draufsicht dargestellte Zuluftdecke 1 ist in Figur 2 in einem vertikalen Schnitt abgebildet. Hier sind ein weiteres Mal die einzelnen Anschlussmodule 2, 2', 2", Z"' angeordnet, wobei aufgrund der Darstellungsweise lediglich zwei Anschlussmodule 2, 2" erkennbar sind. Diese sind - wie vorstehend beschrieben -, mittels des Verbindungskanals 4 miteinander verbunden. Die einzelnen miteinander verbundenen Anschlussmodule 2, 2', 2", 2'" bilden jeweils einen eigenständigen Lufteintrittsraum. Im gezeigten Beispiel weist die Zuluftdecke 1 entsprechend zwei Lufteintrittsräume auf, wobei ein Erster aus den miteinander verbundenen Anschlussmodulen 2, 2" und ein Zweiter aus den ebenfalls miteinander verbundenen Anschlussmodulen 2', 2'" gebildet wird. Beide Lufteintrittsräume sind von einem Luftaustrittsraum 7 auf eine solche Weise mittels Filtereinheiten 8 abgetrennt, dass der jeweilig zugeführte Zuluftstrom nur dadurch in den Luftaustrittsraum 7 gelangen kann, dass er eine der Filtereinheiten 8 durchströmt. Auf diese Weise ist sichergestellt, dass keine ungefilterte Luft in den Luftaustrittsraum 7 gelangt.

Der Luftaustrittsraum 7 ist als ein durchgehender einheitlicher Raum ausgeführt, so dass alle in den Luftaustrittsraum 7 gelangenden Zuluftströme von jeder Stelle innerhalb des Luftaustrittsraums 7 zu jeder anderen Stelle im Luftaustrittsraum 7 gelangen können. Dieser weist folglich keinen abgetrennten Bereich auf. Die aus den einzelnen Lufteintrittsräumen durch die Filterelemente 8 strömenden Zuluftströme werden in dem durchgehenden Luftaustrittsraum 7 zusammengeführt und vereint. Dadurch wird der Zuluftstrom homogenisiert.

Zu einem nicht dargestellten Zielraum (beispielsweise einem Operationssaal) hin ist der Luftaustrittsraum 7 durch eine Luftaustrittsfläche 9 begrenzt. Diese wird im vorliegenden Ausführungsbeispiel durch eine einlagige Schicht aus Laminarisatoren 10 gebildet. Die Zuluftdecke 1 weist über eine gesamte Breite und Länge jeweils vier einzelne Laminarisatoren 10 auf, so dass insgesamt 16 Laminarisatoren 10 die Luftaustrittsfläche 9 der Zuluftdecke 1 bilden. Die einzelnen Laminarisatoren 10, die jeweils einen Rahmen 11 und ein textiles Gewebe 12 aufweisen, sind mittels Lagerschienen 13 in der Zuluftdecke 1 befestigt. Die Laminarisatoren 10 sorgen durch ihren Strömungswiderstand für eine gleichmäßige Verteilung und eine Gleichrichtung des in den Zielraum abströmenden Zuluftstroms.

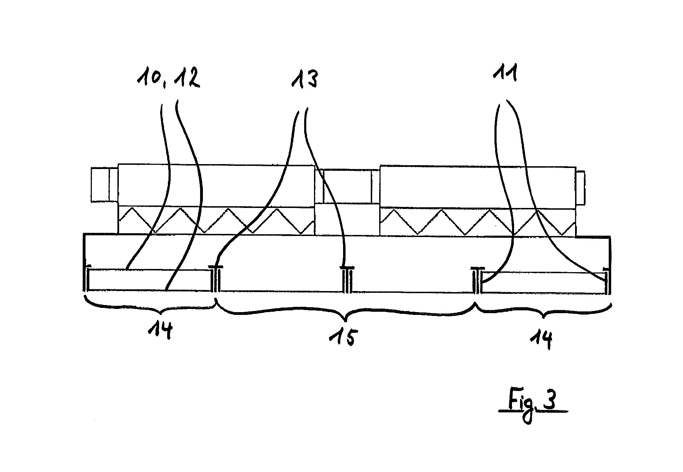

Eine alternative Anordnung der Laminarisatoren 10 ist in einem weiteren Ausführungsbeispiel, das in Figur 3 abgebildet ist, verwirklicht. Dies zeigt eine doppellagige Anordnung der Laminarisatoren 10 in Außenbereichen 14 der zugehörigen Zuluftdecke 1. Diese doppellagige Anordnung führt dazu, dass eine Abströmgeschwindigkeit des Zuluftstroms von der Zuluftdecke 1 in den Zielraum gegenüber einem Innenbereich 15 der Zuluftdecke 1 reduziert ist. Alternativ zu einer mehrlagigen Anordnung der Laminarisatoren 10 ist ebenfalls eine Verwendung unterschiedlich gearteter Laminarisatoren 10 hinsichtlich des verwendeten textilen Gewebes 12 denkbar. Ein Vorteil bei einer Verwendung identischer Laminarisatoren 10 liegt darin, dass weder eine Verwechslungsgefahr bei einer Montage vorliegt, noch eine aufwendige Lagerhaltung für verschiedene Typen von Laminarisatoren 10 betrieben werden muss. Liegt eine Erzeugung unterschiedlicher Abströmgeschwindigkeiten in verschiedenen Bereichen der Zuluftdecke 1 vor, so spricht der Fachmann von einem so genannten "Differentialflow". Insbesondere wird hierbei der Innenbereich 15 der Zuluftdecke derart eingestellt, dass eine Abströmungsgeschwindigkeit des Zuluftstroms in den Zielraum in diesem Innenbereich 15 gegenüber derjenigen Abströmungsgeschwindigkeit in dem Außenbereich 14 der Zuluftdecke 1 erhöht ist. Auf diese Weise wird eine im Verhältnis intensivere Belüftung beispielsweise eines Operationstisches, der unterhalb des Innenbereichs 15 der Zuluftdecke 1 angeordnet ist, im Vergleich zu einer Umgebung des Operationstisches erzielt.

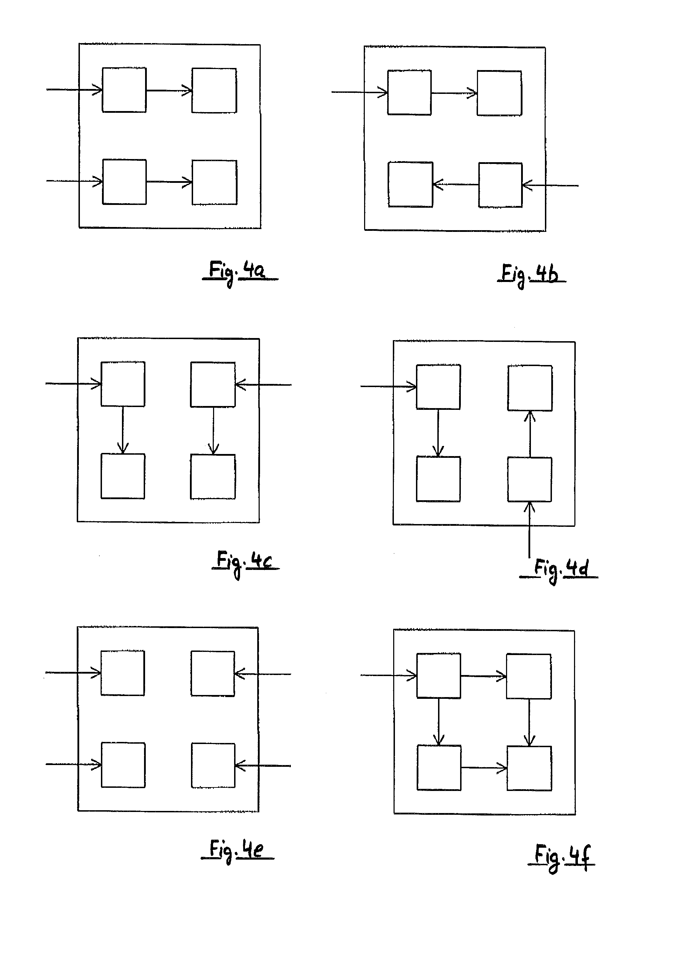

Abschließend zeigen weitere Beispiele unterschiedliche Anschlussarten der Zuluftdecke 1 an einen oder mehrer Zuluftkanäle. Diese sind in den Figuren 4a bis 4g abgebildet. Dabei ist die Anschlussart aus Figur 4a bereits aus dem ersten Ausführungsbeispiel bekannt, welches in Figur 1 dargestellt ist.

Besonders hervorzuheben sind die Anschlussarten, die in den Figuren 4e und 4f graphisch veranschaulicht sind. Erstere zeigt einen separaten Anschluss eines jeden Anschlussmoduls 2, 2', 2", 2'" an einen eigenen Zuluftkanal. Die zugehörige Zuluftdecke 1 verfügt entsprechend über vier Lufteintrittsräume, welche jeweils lediglich aus einem Anschlussmodul 2, 2', 2", 2'" gebildet werden. Im genauen Gegenteil dazu steht eine in Figur 4f dargestellte Zuluftdecke. Diese verfügt über lediglich eine Stelle, an der Zuluft zugeführt wird. Das angeschlossene Anschlussmodul 2 ist - analog zu den übrigen Anschlussmodulen 2', 2", 2"' - jeweils mit den beiden benachbarten Anschlussmodulen 2', 2" verbunden. Im Ergebnis sind sämtliche vier Anschlussmodule 2, 2', 2", 2'" über eine Art "Ringleitung" miteinander verbunden, so dass der Lufteintrittsraum in diesem Beispiel von allen vier Anschlussmodulen 2, 2', 2", 2'" gebildet wird.

Eine Möglichkeit, die Verbindungskanäle 4 beliebig anzuordnen, verleiht der erfindungsgemä-βen Zuluftdecke 1 eine maximale Flexibilität hinsichtlich einer Zuluftkanalführung.

### Bezugszeichenliste

- 1: Zuluftdecke
- 2, 2', 2", 2'": Anschlussmodul
- 3: Anschlussstutzen
- 4: Verbindungskanal
- 5: Pfeil
- 6: Pfeil
- 7: Luftaustrittsraum
- 8: Filtereinheit
- 9: Luftaustrittsfläche
- 10: Laminarisator
- 11: Rahmen
- 12: Gewebe
- 13: Lagerschiene
- 14: Außenbereich
- 15: Innenbereich

## Patentansprüche

1. Zuluftdecke (1), insbesondere für Operationssäle, aufweisend mindestens einen Lufteintrittsraum, mindestens eine Filtereinheit (8) und einen Luftaustrittsraum (7) mit einer durch mindestens einen Laminarisator (10) gebildeten Luftaustrittsfläche (9), wobei ein Zuluftstrom mittels mindestens eines Anschlussstutzens (3) in den mindestens einen Lufteintrittsraum leitbar und von dort ausgehend dem Luftaustrittsraum (7) ausschließlich mittels eines Durchströmens der mindestens einen Filtereinheit (8) zuführbar ist, wobei der mindestens eine Lufteintrittsraum (7) aus einer Mehrzahl einzelner, in einer zu der Luftaustrittsfläche (9) parallelen Ebene angeordneter Anschlussmodule (2, 2', 2", 2"') zusammengesetzt ist, **dadurch gekennzeichnet, dass** der zwischen der mindestens einen Filtereinheit (8) und der Luftaustrittsfläche (9) angeordnete Luftaustrittsraum (7) durchgehend ausgeführt ist.

2. Zuluftdecke (1) nach Anspruch 1, **dadurch gekennzeichnet, dass** der mindestens eine Lufteintrittsraum aus genau vier Anschlussmodulen (2, 2', 2", 2"') gebildet ist, die vorzugsweise quadratisch angeordnet sind.

3. Zuluftdecke (1) nach Anspruch 1 oder 2, **dadurch gekennzeichnet, dass** die einzelnen Anschlussmodule (2, 2', 2", 2"') mittels Verbindungskanälen (4) untereinander verbunden sind.

4. Zuluftdecke (1) nach einem der Ansprüche 1 bis 3, **dadurch gekennzeichnet, dass** jedes einzelne Anschlussmodul (2, 2', 2", 2"') mindestens drei Anschlussstutzen (3) aufweist.

5. Zuluftdecke (1) nach einem der Ansprüche 1 bis 4, **dadurch gekennzeichnet, dass** jedes einzelne Anschlussmodul (2, 2', 2", 2"') mittels eines eigenen Anschlussstutzens (3) mit einem Zuluftstrom versorgbar ist.

6. Zuluftdecke (1) nach einem der Ansprüche 1 bis 5, **dadurch gekennzeichnet, dass** jedes einzelne Anschlussmodul (2, 2', 2", 2"') mit seinen beiden nächstgelegenen Anschlussmodulen (2, 2', 2", 2"') verbunden ist.

7. Zuluftdecke (1) nach einem der Ansprüche 1 bis 6, **dadurch gekennzeichnet, dass** der mindestens eine Laminarisator (10) aus einem mit mindestens einem textilen Gewebe (12) bespannten Rahmenelement (11) gebildet ist.
